# EUROPÄISCHE PATENTANMELDUNG

(11) **EP 4 360 746 A1**
(43) Veröffentlichungstag der Anmeldung: **01.05.2024**
(21) Anmeldenummer: 22204421.6
(22) Anmeldetag: 28.10.2022
(51) Int. Cl.: B01F 31/85, A23P 10/30, A23D 7/02, B01F 23/411, A23D 7/00

(54) **VERFAHREN ZUM HERSTELLEN EINES VORPRODUKTES FÜR LEBENSMITTEL**

(71) Anmelder: Monastic Beverages GmbH, 04736 Waldheim (DE)
(72) Erfinder: Michael, Sebastian, 04105 Leipzig (DE); Pech, Justinus Christoph Nils, 04105 Leipzig (DE)
(74) Vertreter: Zeitler Volpert Kandlbinder Patentanwälte Partnerschaft mbB

(57) **Zusammenfassung**

Die Erfindung betrifft ein Verfahren zum Herstellen eines Vorproduktes für Lebensmittel, wobei das Vorprodukt eine Mischung aus Öl (26) und Wasser (28) enthält. Hierbei wird die Mischung aus Öl (26) und Wasser (28) einer Ultraschallbehandlung ausgesetzt, wobei die Ultraschallbehandlung beendet wird, sobald sich eine milchig-wässrige Stammlösung ergibt.

## Beschreibung

Die Erfindung betrifft ein Verfahren zum Herstellen eines Vorproduktes für Lebensmittel, wobei das Vorprodukt eine Mischung aus Öl und Wasser enthält, gemäß dem Oberbegriff des Patentanspruchs 1.

Bekannte Verfahren zum Erzeugung von Emulsionen oder Makroemulsionen in der Lebensmittelindustrie nutzen oberflächenaktive Substanzen (Emulgatoren, Tenside) zur Stabilisierung der Emulsion. Emulgatoren, welche dabei eingesetzt werden, gelten zwar als allgemein unbedenklich, befinden sich aber auch immer wieder in Diskussionen über Notwendigkeit, Nutzen und gesundheitliches Risiko. Gerade im Bereich der biologisch erzeugten Lebensmittel, der Demeter Lebensmittel und der veganen Lebensmittel werden Emulgatoren kritisch gesehen bzw. abgelehnt, da natürliche bzw. nichttierische Substanzen nur eingeschränkt zur Verfügung stehen.

Aus der DE 10 2007 057 258 B4 ist ein Verfahren zu Herstellung einer geschmacksgebenden Öl-in-Wasser-Emulsion (OIW) mit hoher Aufrahm- und Trübungsstabilität bei Verdünnung zur Herstellung von Lebensmitteln bekannt. Die O/W-Emulsion wird mit natürlichen Emulgatoren, insbesondere Proteinen, hergestellt und dient zur Herstellung von Getränken.

Aus der DD 107 431 A5 ist es bekannt, durch Behandeln von Ölemulsionen mit Ultraschall das Öl aus solchen Emulsionen, wie beispielsweise ölhaltigen Abwässern, abzuscheiden.

Verbraucher sind jedoch inzwischen sehr kritisch hinsichtlich der auf der Verpackung angegebenen Inhaltsstoffe. Vor allem Emulgatoren, die sich in einer Liste der Inhaltsstoffe mit vorangestellten Buchstaben "E" (sogen. E-Stoffliste) befinden, werden als ungesund und nicht wünschenswert eingestuft.

Emulgieren mittels Ultraschall ist beispielsweise aus https://www.hielscher.com/emulsify_01.htm bekannt für Kosmetika, Hautlotionen, pharmazeutische Salben, Lacke, Farben und Schmiermittel sowie Kraftstoffe. Eine Verwendung dieser Technik für Vorprodukte in Form von Öl-in-Wasser-Emulsionen von Lebensmitteln ist jedoch nicht vorgesehen.

Der Erfindung liegt die Aufgabe zugrunde, ein Vorprodukt für ein Lebensmittel zur Verfügung zu stellen, das keinerlei Emulgatoren enthält.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass die Mischung aus Öl und Wasser einer Ultraschallbehandlung ausgesetzt wird, wobei die Ultraschallbehandlung beendet wird, sobald sich eine milchig-wässrige Stammlösung ergibt.

Dies hat den Vorteil, dass sich in überraschender Weise gezeigt hat, dass eine derart hergestellte, milchig-wässrige Stammlösung bei Raumtemperatur über mehrere Wochen hinweg stabil eine Öl-in-Wasser-Emulsion ohne wesentliche Phasentrennung bleibt. Das Verfahren ist einfach und kostengünstig ausführbar, da die Energie, Frequenz und Pulsweite des Ultraschalls dabei variieren kann, so dass unterschiedlichste Ultraschallgeräte angewendet werden können. Es variiert dabei dann lediglich die Zeitdauer der Anwendung der Ultraschallbehandlung, die sich durch optisches Überwachen der Erzielung einer milchig-wässrige Stammlösung ergibt. Das spätere, daraus hergestellte Lebensmittel enthält keinerlei Emulgatoren und die Emulsion bleibt trotzdem über lange Zeit, insbesondere mehrere Wochen, ohne wesentliche Phasentrennung stabil.

Eine besonders einfache Ausführungsform des Verfahrens erzielt man dadurch, dass die Ultraschallbehandlung durch Eintauchen eines Ultraschallkopfes in die Mischung aus Öl und Wasser durchgeführt wird.

Ein für die Lebensmittelherstellung besonders bevorzugtes, in sich geschlossenes System erzielt man dadurch, dass die Ultraschallbehandlung derart durchgeführt wird, dass die Mischung aus Öl und Wasser solange wiederholt ein Durchflussultraschallgerät durchläuft, bis die milchig-wässrige Stammlösung erzielt wird.

Eine besonders stabile milchig-wässrige Stammlösung erzielt man dadurch, dass die Mischung aus Öl und Wasser ein Verhältnis von 1 Teil Öl auf 100 Teile Wasser in Bezug auf das Gewicht aufweist.

Aus der milchig-wässrigen Stammlösung lassen sich dadurch besonders wohlschmeckende Lebensmittel herstellen, dass das Öl ein natives, ätherisches Öl in pharmazeutischer Qualität ist.

Eine besonders stabile milchig-wässrige Stammlösung erzielt man in kurzer Zeit dadurch, dass die Ultraschallbehandlung mit einer Leistung von 78 Watt, einer Frequenz von 26 kHz und einer Pulsweite von 100% erfolgt.

Eine weitere Verbesserung der Stabilität der hergestellten milchig-wässrigen Stammlösung mit größtmöglicher Homogenität erzielt man dadurch, dass die Ultraschallbehandlung beendet wird, wenn zusätzlich ein Ölfilm bzw. eine Ölphase auf einer Oberfläche der Mischung aus Öl und Wasser nicht mehr vorhanden ist.

In einer besonders bevorzugten Ausführungsform wird die Ultraschallbehandlung mit einer Schall-Frequenz im Bereich von 20 kHz bis 10 GHz, insbesondere 25 kHz, 26 kHz, 30 kHz, 35 kHz, 40kHz, 45 kHz, 50 kHz, 55 kHz, 60 kHz, durchgeführt.

Die Erfindung wird im Folgenden anhand der Zeichnung näher erläutert. Diese zeigt in
- Fig. 1: ein Ablaufdiagramm für eine bevorzugte Ausführungsform des erfindungsgemäßen Verfahrens und
- Fig. 2: eine Vorrichtung zum Ausführen des erfindungsgemäßen Verfahrens in einer schematischen Schnittansicht.

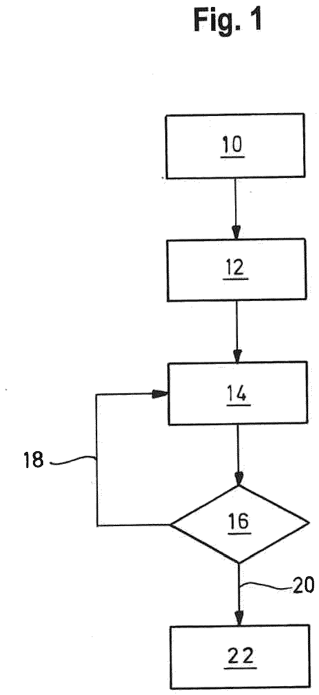

Das in Fig. 1 dargestellte Ablaufdiagramm für eine bevorzugte Ausführungsform des erfindungsgemäßen Verfahrens weist folgende Schritte auf.

In einem ersten Schritt 10 werden ein Öl und Wasser in einem Gefäß zusammen geschüttet. Hierbei werden beispielsweise zuerst das Wasser und anschließend das Öl in das Gefäß eingefüllt, so dass das Öl auf dem Wasser aufschwimmt. Obwohl zu diesem Zeitpunkt Öl und Wasser nicht miteinander durchmischt sind, wird diese Kombination aus Öl und Wasser in einem Gefäß nachfolgend als "*Mischung aus Öl und Wasser*" bezeichnet.

Anschließend wird in einem zweiten Schritt 12 ein Ultraschallkopf bzw. eine Sonotrode in diese Mischung aus Öl und Wasser eingetaucht. Der Ultraschallkopf taucht dabei wahlweise nur bis zum Öl ein oder taucht durch das Öl hindurch bis in das Wasser ein.

In einem weiteren dritten Schritt 14 wird der Ultraschallkopf mit Energie aus einem Ultraschallgeber beaufschlagt, so der Ultraschallkopf Ultraschallwellen in die Mischung aus Öl und Wasser in den Gefäß abgibt. Mittels des Ultraschallgebers und des Ultraschallkopfes werden die Tropfen zerkleinert. Das Prinzip der Ultraschall-Emulgierung basiert auf der Kavitation, welche erzeugt wird, wenn hochintensive Ultraschallwellen in eine Flüssigkeit eingetragen werden. Die Ultraschallkavitation erzeugt hohe Scherkräfte sowie Mikroturbulenzen in der Flüssigkeit, so dass die Tropfen der zwei Phasen (Wasser- und Ölphase) zerkleinert und zu einer Phase vermischt werden. Hierbei bildet das Öl die sogenannte "*innere Phase*" und das Wasser die sogenannte "*äußere Phase*". Solange der Anteil der inneren Phase 30% oder weniger beträgt, werden die physikalischen Eigenschaften der sich ergebenden Emulsion von der äußeren Phase, also dem Wasser, bestimmt.

In einem vierten Schritt 16 wird geprüft, ob die Emulsion bereits zu einer milchig-wässrigen Stammlösung geworden ist. Ist dies nicht der Fall, wird über einen ersten Pfad 18 zurück zum dritten Schritt 14 gesprungen. Ist dies der Fall geht es über einen zweiten Pfad 20 weiter zum nächsten fünften Schritt 22, bei dem die Anwendung von Ultraschall beendet wird.

Optional zusätzlich wird im vierten Schritt 16 geprüft, ob auf der Oberfläche der Mischung aus Öl und Wasser ein Ölfilm bzw. eine Ölphase vollständig verschwunden ist. Nur wenn auch diese Prüfung mit ja beantwortet wird, geht es weiter mit dem zweiten Pfad 20 zum fünften Schritt 22, ansonsten zurück über den ersten Pfad 18 zum dritten Schritt 14.

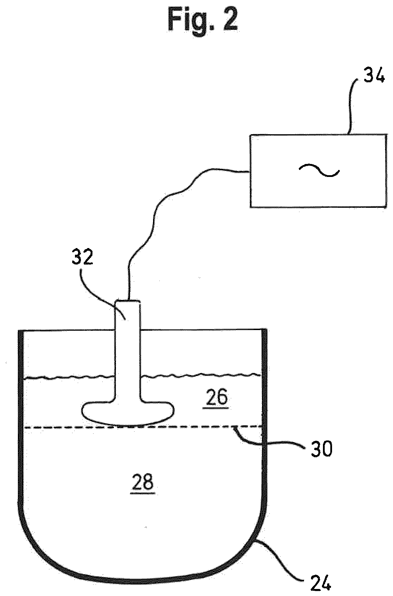

Fig. 2 veranschaulicht eine beispielhafte Ausführungsform für eine Vorrichtung zur Ausführung des erfindungsgemäßen Verfahrens. In einem Gefäß 24 sind Öl 26 und Wasser 28 zusammen geschüttet bzw. eingefüllt. Eine Grenzschicht 30 trennt noch das Öl 26 vom Wasser 28. Ein Ultraschallkopf 32 ist in die Mischung aus Öl 26 und Wasser 28 eingetaucht, wobei dieser bis zur Grenzschicht 30 eintaucht. Alternativ kann der Ultraschallkopf 32 nur bis zum Öl 26 oder durch das Öl 26 hindurch bis in das Wasser 28 eintauchen. Sobald nun über einen Ultraschallgeber 34 der Ultraschallkopf 32 mit Energie beaufschlagt wird, strahlt der Ultraschallgeber 34 Ultraschall in die Mischung aus Öl 26 und Wasser 28 ab, wodurch es durch den oben beschriebenen Mechanismus zu einer Durchmischung von Öl 26 und Wasser 28 kommt. Hierbei wird das Öl 26 als innere Phase in kleine Tröpfchen innerhalb des Wassers 28 als äußere Phase umgewandelt. Je länger die Anwendung des Ultraschalls über den Ultraschallkopf 32 dauert, desto kleiner wird der Durchmesser der Öltröpfchen.

Es hat sich überraschenderweise herausgestellt, dass sich eine besonders stabile Emulsion aus Öl 26 und Wasser 28 gibt, wenn die Öltröpfchen einen durchschnittlichen Durchmesser im Bereich von größer gleich 1 µm aufweisen. Eine derartige Emulsion nennt man Makroemulsion. Der Ausdruck "*stabile Emulsion*" bezeichnet hierbei, dass über längere Zeit keine Entmischung von Öl 26 und Wasser 28 in getrennte Phasen mit der Grenzschicht 30, wie in Fig. 2 dargestellt, erfolgt. Die längere Zeit bezeichnet hierbei Zeitintervalle von mehreren Wochen.

Eine längere Anwendung von Ultraschall nach der Erreichung von durchschnittlichen Öltröpfchengrößen im Bereich von größer gleich 1µm würde dazu führen, dass der durchschnittliche Durchmesser der Öltröpfchen im Bereich von 1nm oder kleiner ist. Eine derartige Emulsion nennt man Nanoemulsion. Hierbei hat sich überraschenderweise herausgestellt, dass sich eine weniger stabile Emulsion ergibt als bei einer Makroemulsion.

Es ist erfindungsgemäß nicht notwendig, die durchschnittliche Öltröpfchengröße während der Anwendung von Ultraschall aufwendig zu bestimmen. Stattdessen erkennt man das Erreichen der Makroemulsion dadurch, dass sich eine milchig-wässrige Stammlösung ergibt. Weiterhin erkennt man eine homogene Durchmischung zwischen Öl 26 und Wasser 28 dadurch, dass sich an der Oberfläche der Mischung aus Öl 26 und Wasser 28 kein Ölfilm bzw. keine Ölphase mehr befindet. Somit kann die Zeitdauer der Ultraschallanwendung einfach durch visuelles beobachten der Mischung aus Wasser 28 und Öl 26 in dem Gefäß 24 erfolgen.

Erfindungsgemäß ist es nicht erforderlich, dass eine vorbestimmte Energie des Ultraschalleintrags oder eine vorbestimmte Frequenz der Ultraschallwellen oder eine vorbestimmte Amplitude der Ultraschallwellen oder eine vorbestimmte Pulsweite der Ultraschallwellen eingehalten werden muss. Diese Parameter dürfen von Anwendung zu Anwendung oder auch sogar innerhalb einer Anwendung von Ultraschall variieren und führen lediglich zu einer Änderung der Zeitdauer der Anwendung des Ultraschalls bis die gewünschte milchig-wässrige Stammlösung erzielt ist.

Das erfindungsgemäße Verfahren nutzt allein Ultraschall, um Öltröpfchen stabil in Wasser zu verteilen. Es entsteht eine milchig-wässrige Stammlösung, die in Lebensmitteln weiterverarbeitet werden kann.

Alternativ kann statt dem Ultraschallkopf 32 auch ein Durchflussultraschallsystemen angewendet werden. Hierbei kann in vorteilhafterweise in einem geschlossenen System die Mischung aus Öl 26 und Wasser 28 wiederholt durch das Durchflussultraschallsystemen geführt werden, bis die gewünschte milchig-wässrige Stammlösung erzielt wird.

Da flüssig-in-flüssig-Emulsionen in Lebensmitteln weit verbreitet sind, ergibt sich eine breite Anwendungsmöglichkeit für das erfindungsgemäße Verfahren.

Das System aus Ultraschallkopf 32 und Ultraschallgeber 34 ist beispielsweise ein Hielscher Ultrasonic UP200St Ultraschallgerät.

Nachfolgend wird beispielhaft ein konkretes Anwendungsbeispiel für das erfindungsgemäße Verfahren beschrieben. Dieses ist jedoch lediglich beispielhaft und soll in keiner Weise die Erfindung einschränken.

### Beispiel:

### Herstellung eines alkoholfreien Gin-Tonic-ähnlichen, alkoholfreien Getränkes:

In einem konkreten Beispiel soll ein alkoholfreies Gin-Tonic-ähnliches Getränk hergestellt werden, das in keinem Produktionsschritt Ethylalkohol oder verwandte Lösungsmittel oder Alkohole enthält.

Es wird eine Mischung nativen ätherischen Ölen (2,25g) in pharmazeutischer Qualität mit vorbestimmter Zusammensetzung in die einhundertfache Masse gereinigtes Wasser (Aqua purificata Ph. Eur., 225g) eingetropft und für 20 Sekunden mit einem Hielscher Ultrasonic UP200St Ultraschallgerät beschallt.

Das Gerät hat eine Maximalleistung von 200W und eine Frequenz von 26kHz.

Für den beispielhaften Prozess wird mit den Geräte-Standardeinstellungen (P 78 W (Leistung), C 100% (Puls), A 53% (Amplitude)) gearbeitet.

Die erzeugte Makroemulsion-Stammlösung bzw. milchig-wässrige Stammlösung ist bei Raumtemperatur über Wochen physikalisch und mikrobiell stabil.

Sie lässt sich mit weiteren flüssigen polaren Medien verdünnen, z.B. Wasser oder Tonic.

Es entsteht bei entsprechender Verdünnung (z.B. 0,75g auf 200g) mit Tonic ein klares und typisch wohlschmeckendes Getränk, ähnlich einem Gin-Tonic, jedoch ohne Alkohol.

Das Gin-Aroma wird durch die genannten ätherischer Öle ersetzt.

Die Verwendung von nativen ätherischen Ölen ist lediglich beispielhaft. Es kann auch jedes andere flüssige Lebensmittel mit den physikalischen Eigenschaften eines Öles verwendet werden. Weiterhin kann statt einer Mischung von Ölen auch nur ein Öl verwendet werden. Ebenso ist die Verwendung von Ölen mit pharmazeutischer Qualität lediglich beispielhaft. Es muss nicht zwangsweise eine pharmazeutische Qualität des verwendeten Öles bzw. der verwendeten Öle vorhanden sein.

## Patentansprüche

1. Verfahren zum Herstellen eines Vorproduktes für Lebensmittel, wobei das Vorprodukt eine Mischung aus Öl (26) und Wasser (28) enthält,
**dadurch gekennzeichnet,**
**dass** die Mischung aus Öl (26) und Wasser (28) einer Ultraschallbehandlung ausgesetzt wird, wobei die Ultraschallbehandlung beendet wird, sobald sich eine milchig-wässrige Stammlösung ergibt.

2. Verfahren nach Anspruch 1, **dadurch gekennzeichnet, dass** die Ultraschallbehandlung durch Eintauchen eines Ultraschallkopfes (32) in die Mischung aus Öl (26) und Wasser (28) durchgeführt wird.

3. Verfahren nach Anspruch 1, **dadurch gekennzeichnet, dass** die Ultraschallbehandlung derart durchgeführt wird, dass die Mischung aus Öl (26) und Wasser (28) solange wiederholt ein Durchflussultraschallgerät durchläuft, bis sich die milchig-wässrige Stammlösung erzielt wird.

4. Verfahren nach mindestens einem der vorhergehenden Ansprüche, **dadurch gekennzeichnet, dass** die Mischung aus Öl (26) und Wasser (28) ein Verhältnis von 1 Teil Öl (26) auf 100 Teile Wasser (28) in Bezug auf das Gewicht aufweist.

5. Verfahren nach mindestens einem der vorhergehenden Ansprüche, **dadurch gekennzeichnet, dass** das Öl (26) ein natives, ätherisches Öl in pharmazeutischer Qualität ist.

6. Verfahren nach Anspruch 1 oder 2, **dadurch gekennzeichnet, dass** die Ultraschallbehandlung mit einer Leistung von 78 Watt, einer Frequenz von 26 kHz und einer Pulsweite von 100% erfolgt.

7. Verfahren nach mindestens einem der vorhergehenden Ansprüche, **dadurch gekennzeichnet, dass** die Ultraschallbehandlung beendet wird, wenn zusätzlich ein Ölfilm bzw. eine Ölphase auf einer Oberfläche der Mischung aus Öl (26) und Wasser (28) nicht mehr vorhanden ist.

8. Verfahren nach mindestens einem der vorhergehenden Ansprüche, **dadurch gekennzeichnet, dass** die Ultraschallbehandlung mit einer Schall-Frequenz im Bereich von 20 kHz bis 10 GHz, insbesondere 25 kHz, 26 kHz, 30 kHz, 35 kHz, 40kHz, 45 kHz, 50 kHz, 55 kHz, 60 kHz, durchgeführt wird.
